# EUROPEAN PATENT SPECIFICATION

(11) **EP 2 818 381 B1**
(45) Date of publication and mention of the grant of the patent: **06.01.2021**
(21) Application number: 14164854.3
(22) Date of filing: 16.04.2014
(51) Int. Cl.: B62B 5/02

(54) **TROLLEY FOR THE TRANSPORTATION OF A LOAD ON STAIRCASES**
WAGEN ZUM TRANSPORT EINER LAST AUF TREPPEN
CHARIOT POUR LE TRANSPORT D'UNE CHARGE SUR DES ESCALIERS

(30) Priority: 09.05.2013 IT VR20130107
(43) Date of publication of application: 31.12.2014
(73) Proprietor: Zonzini, Claudio, 37052 Casaleone (VR) (IT); Zonzini, Jacopo, 37052 Casaleone (VR) (IT); Zonzini, Arianna, 37052 Casaleone (VR) (IT)
(72) Inventor: Zonzini, Claudio, 37052 Casaleone (VR) (IT); Zonzini, Jacopo, 37052 Casaleone (VR) (IT); Zonzini, Arianna, 37052 Casaleone (VR) (IT)
(74) Representative: Laghi, Alberto

(56) References cited:
- US-A- 4 027 889
- US-A- 4 033 595
- US-A- 4 747 457
- US-A- 5 868 403
- US-A1- 2006 037 789
- US-A1- 2011 175 302

## Description

The present invention regards a trolley for transporting a load on staircases, both straight and helical staircases.

Trolleys have already been proposed for transporting loads on staircases, which usually have a frame mounted on wheels or tracks and a grip handle, *as described for example in* US 4033595*,* US 2011175302 *and* US 5868403*.*

Nevertheless, up to now a trolley has not been proposed that allows easily transporting any type of load on a wide range of staircases.

The main object of the present invention is to provide a new trolley that is suitable for transporting a load on staircases.

Another object of the present invention is to provide a new trolley that allows safely transporting a load on staircases, so as to prevent ruining or overturning the load.

Another object of the present invention is to provide a new trolley that can be made to easily ascend onto the first step or easily descend from the last step of a staircase.

Another object of the present invention is to provide a trolley by means of which the transport conditions can be easily adjusted during the ascent and descent on and from a staircase.

Another object of the present invention is to provide a trolley capable of transporting a load on straight staircases and on helical staircases, even with very low curvature radius.

Another object of the present invention is to provide a trolley that can be driven starting from both sides thereof.

Another object of the present invention is to provide a trolley capable of balancing the load during the transportation on staircases.

These objects are solved by a trolley as defined in claim 1. Preferred embodiments are defined in the dependent claims.

Further aspects and advantages of the present invention will be clearer from the following detailed description of specific embodiments thereof, such description made with reference to the accompanying drawings, in which:
- Figures 1 to 7 are longitudinal section views of a trolley embodiment according to the present invention in respective operative positions;
- Figures 8 and 9 are slightly top perspective views of a second trolley embodiment according to the present invention with handle on the front of the trolley;
- Figures 10 to 12 are slightly top perspective views of the trolley of Figures 8 and 9 during respective transportation steps of a load on a staircase;
- Figures 13 to 15 are side views of the trolley of Figures 8 and 9 during respective transportation steps for a load on a staircase;
- Figures 16 to 19 are respectively side, front, bottom and slightly top perspective views of the trolley of Figures 8 and 9;
- Figures 20 and 21 are slightly top perspective views of the trolley of Figures 8 and 9 according to the present invention with handle on the back;
- Figures 22 and 23 are slightly top perspective views of the trolley of Figures 20 and 21 during respective transportation steps for a load on a staircase;
- Figures 24 and 26 are side views of the trolley of Figures 22 and 23 during respective steps for transporting a load on a staircase;
- Figures 27 to 30 are respectively side, front, bottom and slightly top perspective views of the trolley of Figures 20 and 21.

In the accompanying drawings, equivalent or similar parts or components were marked with the same reference numbers.

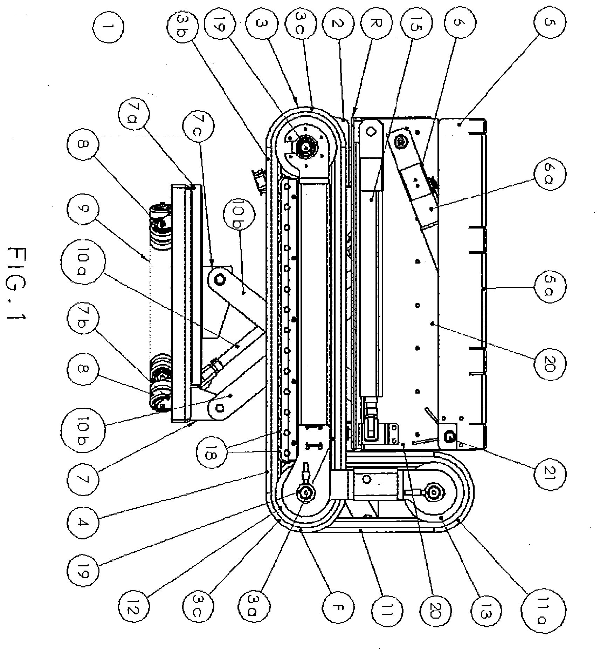

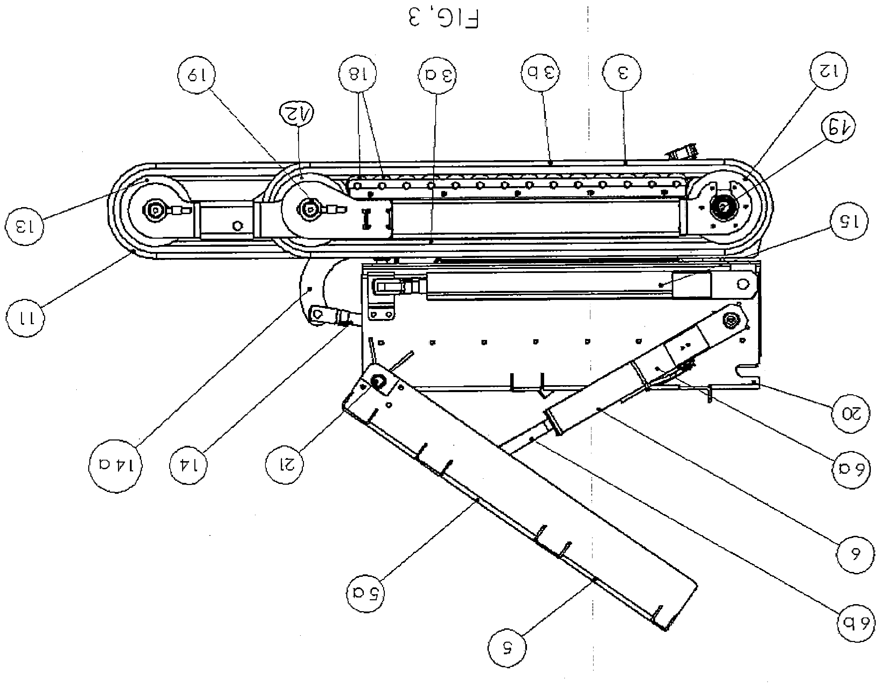

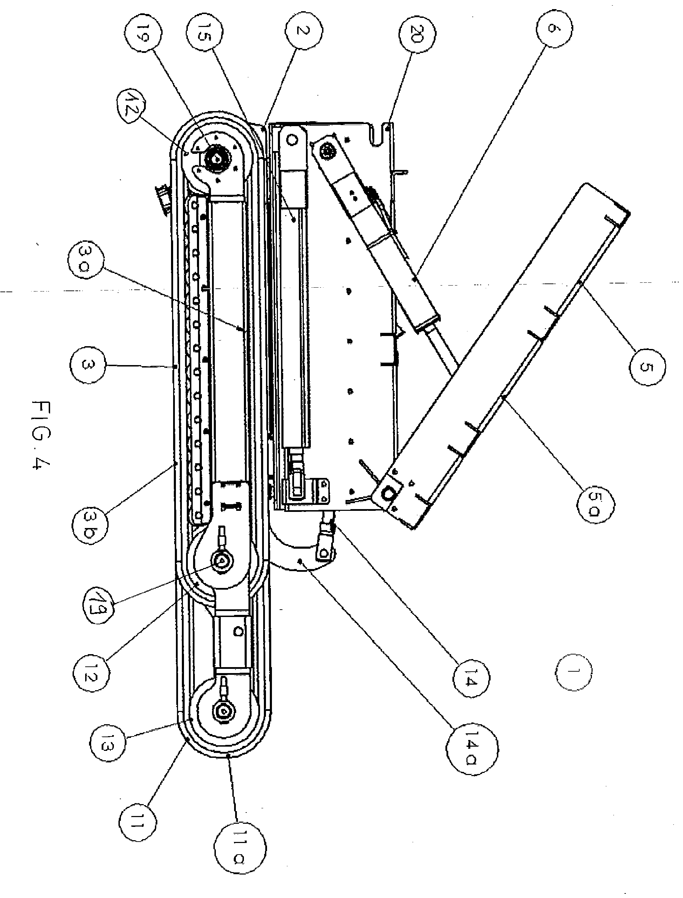

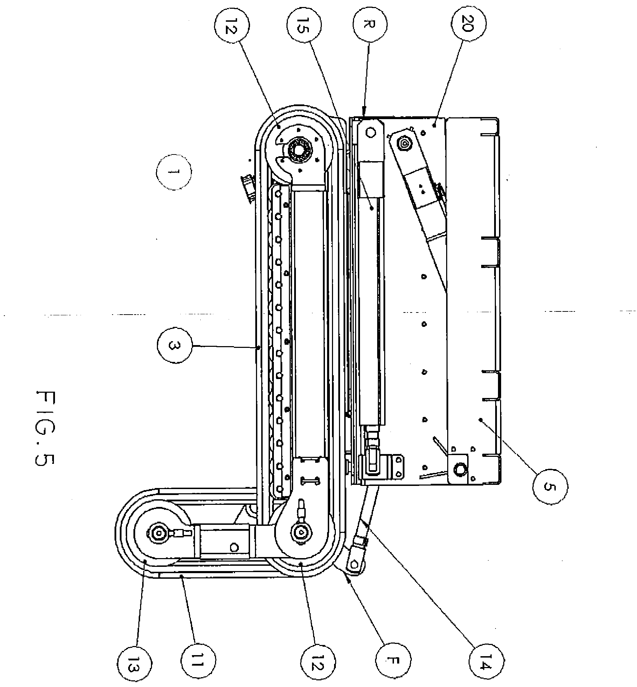

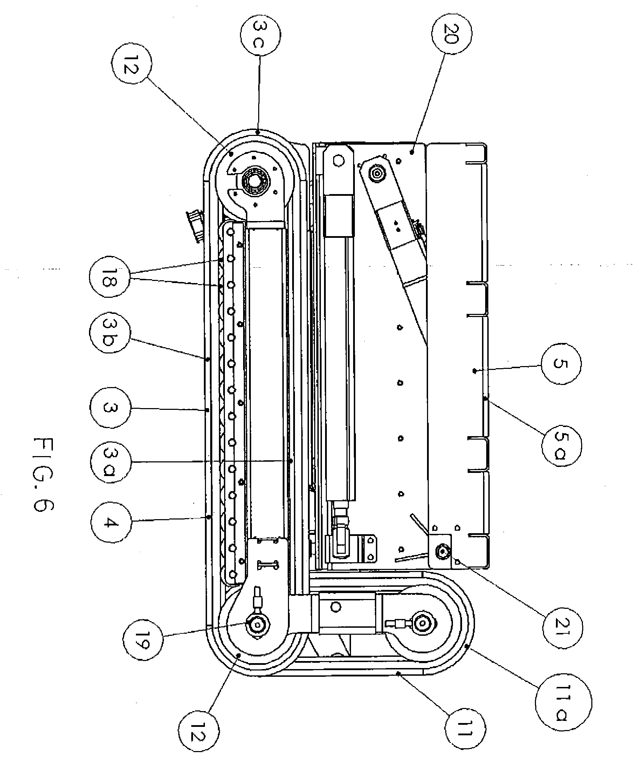

With reference first to Figures 1 to 7, a trolley 1 is illustrated according to the present invention designed to transport a load on staircases, which comprises a main support frame 2 and one or more tracks 3, which are movably or rotatably mounted so as to project on the lower part from the main support frame 2 and which on the lower part define a first slide surface 4 of the trolley 1. For such purpose, preferably, the track/tracks 3 is/are sent around first pulleys or toothed wheels 12 mounted for rotation around first rotation axes (orthogonal to the sheet) and around pins or the like 19, such that each track 3 has a first section, upper in use 3a, preferably flat, a second section, lower in use 3b, preferably flat, as well as two connector curves 3c of the two sections 3a, 3b. The first slide surface 4 is defined by the lower surface (lower in use) of the lower sections 3b. Preferably, two tracks 3 are provided that are substantially parallel to and spaced from each other.

Motor means or means for actuating the track/tracks 3 are then provided, such as an electric motor or the like, not illustrated in the drawings, designed to control the rotation of the track/tracks 3, and if the trolley rests on a surface at the tracks, the advancement of the trolley 1 on the surface. Preferably, each of the two main tracks 3 can be actuated by respective motor means in a manner independent from the other main track 3. Each track 3 can then comprise tensioning rollers 18 for the tracks 3.

The main frame 2 then supports one or more load beds 5 on which the objects to be transported are placed and defining a support surface 5a directed upward in use, and preferably means are provided for tilting or for the angular movement 6 of the load bed/beds 5 with respect to the support frame 2 as well as with respect to the main track/tracks 3. The means for tilting or for the angular movement can for example comprise one or more actuators or jacks, e.g. electric, hydraulic or pneumatic jacks, which are pivoted on one side, e.g. at one end of the cylinder 6a thereof to the main frame 2 and on the other side, e.g. at one end of the stem 6b thereof to the load bed 5. The means for the angular movement 6 are designed to angularly move the load bed 5 around a substantially horizontal axis, preferably transverse to the tracks 3, between a position in which it (the load bed 5) delimits a support surface 5a substantially parallel to the first lower slide surface 4 and a position in which it defines a support surface 5a substantially tilted with respect to the first lower slide surface 4. As will be understood, the means for tilting or for the angular movement 6 of the load bed/beds 5 allow compensating for the slope of the staircase on which the load is moved (in descent or ascent), i.e. when the load is moved on the staircase, the means for the angular movement 6 allow tilting the load bed 5 with respect to the frame 2 and, if desired, placing the load bed 5 in a substantially horizontal position so as to prevent or limit as much as possible the load from slipping with respect to the load bed 5 during the ascent or descent.

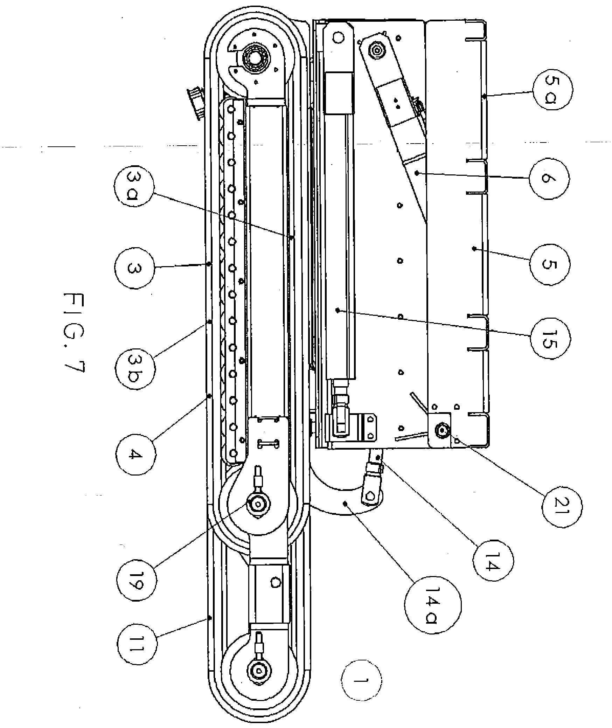

A trolley according to the present invention comprises an auxiliary frame structure 7 (see Fig. 7) which has means for supporting and sliding or rolling on a surface, e.g. wheels 8 delimiting on the lower part a second slide surface 9; lifting-lowering means 10a, 10b are also provided for the auxiliary frame structure 7 intended to move the auxiliary frame structure 7 with respect to the support frame 2.

The lifting-lowering means 10a, 10b can for example comprise one or more actuators 10a, if desired linear, e.g. electric, hydraulic or pneumatic actuators, pivoted at one end thereof to a portion of the auxiliary frame structure 7 and at the other end to the main support frame 2. The lifting-lowering means can also provide for an articulated polygon group 10b, e.g. an articulated parallelogram group, which is pivoted on one side to the auxiliary frame structure 7 and on the other side to the support frame 2.

More particularly, the auxiliary frame structure 7 comprises a base component 7a, below which the wheels 8 are pivoted, e.g. two or four wheels with horizontal rolling axis (horizontal in use). The wheels 8, if desired, can be pivoted around a horizontal axis to brackets 7b, which can be pivoted to the base component 7a around a vertical axis, such that the wheels 8 can be oriented in different running directions, or the brackets can be fixed or are fixable to the base component 7a.

The actuator 10a and the articulated parallelogram group 10b can then be pivoted to the base component 7a or to strip elements 7c projecting upward therefrom.

The lifting-lowering means 10 are designed to move the auxiliary frame structure 7 between:
- an upper rest position (see Figs. 1 to 7), in which the auxiliary frame structure 7 is situated with its support and slide or roll means 8 at a higher level than that of the first slide surface 4 and the trolley 1 is movable by means of the main track/tracks 3, and
- a lower work position (see Fig. 7), in which the main support frame 2 is at a higher level than the auxiliary frame structure 7 and the trolley 1 rests on the auxiliary frame structure 7 and is movable on the slide or roll means 8.

Preferably, the second slide surface 9 is substantially parallel to the first slide surface 4.

Advantageously, when the auxiliary frame structure 7 is placed in the lower work position, the main track/tracks 3 projects/project beyond the auxiliary frame structure 7 at the front F and/or at the back R of the trolley. Still more advantageously, the auxiliary frame structure 7 is housable at an intermediate section of the main support frame 2 and when placed in the upper rest position it is completely arranged within the bulk of the main support frame 2. For such purpose, the auxiliary frame structure 7 preferably has lesser width than the distance between the tracks 3 and is movable between the main tracks 3 between the upper rest position and the lower work position, such that in the upper rest position it is housed within the bulk defined by the main tracks 3 and with slide or slip means (e.g. wheels) 8 at a level higher than the tracks.

In addition to one or more main tracks 3 defining the first slide surface 4, an auxiliary track 11 is provided for one or each main track 3, such auxiliary track 11 placed on the front F or on the back R of the respective main track 3 and is tilted or tiltable with respect thereto. More particularly, as stated above, the main track/tracks 3 is/are mounted or sent around first pulleys or toothed wheels 12, preferably two, rotatably mounted around first rotation axes (orthogonal to the drawings), whereas each auxiliary track 11 is sent around second pulleys or toothed wheels 13, preferably two, rotatably mounted with respect to second rotation axes (also orthogonal to the sheet according to the illustrated embodiment), with the first rotation axes of a main track 3 being substantially parallel to the second rotation axes of a respective auxiliary track 11, such that an auxiliary track 11 is extended starting from the front F or from the back R of a respective main track 3. If desired, a toothed wheel 12 of a main track 3 and a toothed wheel 13 of an auxiliary track are mounted around a same axis or rotation pin 19.

For such purpose, the trolley can also be provided with one or more actuators or the like 14 designed to angularly move the auxiliary track/tracks 11 relative to the main track 3. The actuators 14 are intended to move the auxiliary track/tracks 11 angularly around a transverse axis of the trolley.

The actuator/actuators 14 can have one component pivoted to the main frame 2 or to another component of the trolley and a second component pivoted, by means of a lever 14a or the like, to one or more auxiliary tracks 11.

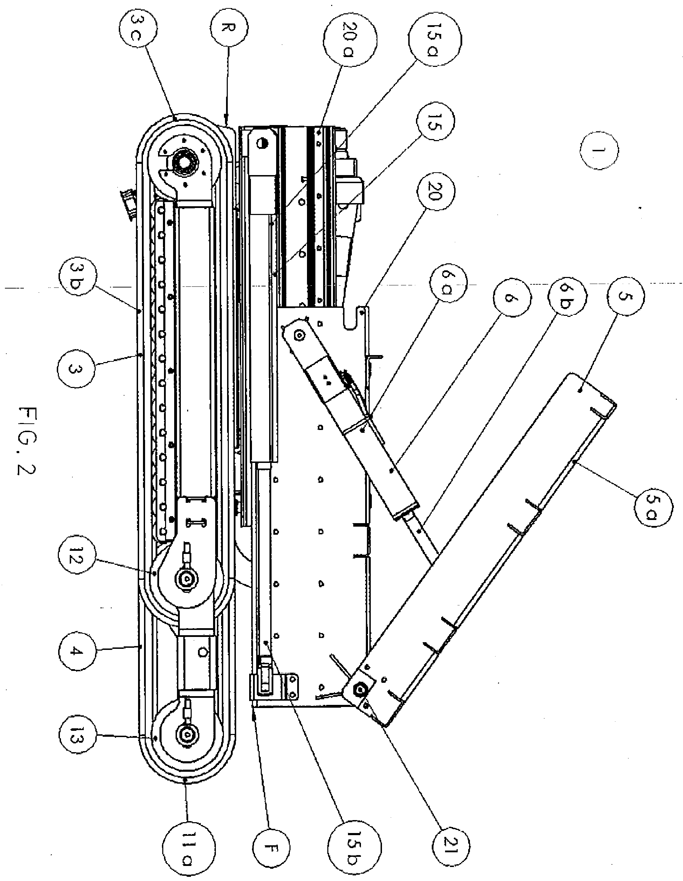

Each auxiliary track 11 can then be angularly moved around a rotation axis of a respective toothed wheel or pulley 13, in one direction or in the other with respect to the respective main track 3, e.g. between a position in which it has free end 11a higher than the respective main track 3 (see Fig. 2) and a position in which it has free end lower than the respective main auxiliary track (see Fig. 2). In such case, naturally, in an intermediate position the auxiliary track 11 would be substantially aligned with the respective main track 3. If desired, the auxiliary track/tracks 11 can also be moved between a position of substantial alignment with a respective main track 3 and a position with free end higher or lower than the respective main track 3.

As will be understood, by placing one or more auxiliary tracks 11 with free end higher than the respective main track 3, it is possible (during the ascent of a staircase with a trolley according to the present invention) to engage the first step of a staircase by means of the free end of the auxiliary track/tracks 11, while the trolley is still on the landing or at the bottom of the staircase. By placing instead one or more auxiliary tracks 11 with free end lower than the respective main track 3, it is possible (during the descent of a staircase with a trolley according to the present invention) to engage a lower step or the landing at the bottom of a staircase by means of the free end of the auxiliary track/tracks 11, while the trolley rests on one or more upper steps, so as to prevent, as will be understood, the oscillating of the trolley during the descent.

Preferably, each auxiliary track 11 has lesser extension than the respective main track 3.

Preferably, the auxiliary track 11 are actuated by means of respective second motor means.

Advantageously, the trolley 1 is also provided with means 15 for actuating or moving the load bed 5 onto the support frame 2 parallel to the main axis (front F-back R direction) of the main track/tracks 3, such actuation or movement means 15 set to translate the load bed 5 onto the support frame 2. The actuation means can comprise an actuator, e.g. linear actuator 15, mounted with position substantially parallel to the main dimension of the main tracks 3, with cylinder 15a pivoted to the frame 2 and stem 15b pivoted to the load bed 5. In such case, the trolley 1 can comprise a small frame or movable frame 20 slidably mounted, preferably at a higher level than the main tracks 3, on the support frame 2 and on which the load bed 5 is pivoted at 21. In such case, the actuator 15 is pivoted on one side to the support frame 2 and on the other side to the small movable frame 20, while the tilt or angular movement means 6 are pivoted on one side, e.g. at one end of a cylinder 6a thereof to the small movable frame 20 and on the other side, e.g. at one end of the stem 6b thereof to the load bed 5.

Preferably, the movable frame 20 is slidably mounted on guide components 20a of the main frame 2. More particularly the movable frame 20 is movable in the direction from the back R to the front F of the trolley 1 and in the direction parallel to the main longitudinal direction of the tracks 3.

If desired, the movable frame 20 is movable between a retracted position, in which the movable frame 20 is just above the main track/tracks 3 and occupies a longitudinal bulk equal to or less than the main track/tracks 3 and an extended position. More particularly, when the main track/tracks 3 and the auxiliary track/tracks 11 are placed in a substantially aligned position, the movable frame 20 in extended position is partly above the main track/tracks 3 and partly above the auxiliary track/tracks 11. This allows suitably centering the barycenter of the load over the entire length of the tracks so as to obtain the maximum stability during the transportation on staircases, since the auxiliary tracks actually constitute an extension of the main tracks, and particularly when the main tracks and the auxiliary tracks are aligned, the total length of the aligned tracks is naturally greater than the length of the single main tracks and by moving the movable frame 20 with the load bed 5 it is possible to center the load as a function of the alignment (longitudinal extension of the main tracks + greater auxiliary tracks) or non-alignment (longitudinal extension of the main tracks + lesser auxiliary tracks) of the main and auxiliary tracks.

With a trolley according to the present invention, if it is required to transport a load up a staircase, the trolley would be brought to the staircase with the auxiliary frame structure 7 in lower work position (see Fig. 7) and the main tracks at the level of the first or second step. Then, the trolley would be made to slide on the support and slide or roll means, which in particular comprise wheels 8 that can be oriented in different running directions and the main tracks or a front end thereof would be brought on top of the first or second step. The movement would then be commanded of the auxiliary frame structure 7 in upper rest position, so as to cause the lifting of the frame structure and the support of the trolley, in particular of the main tracks 3 at the first or if desired second step of the staircase. At this point, upward transportation of the trolley on the staircase could continue on the main tracks 3, by means of actuation thereof by the respective motor means, if desired with the aid of the auxiliary tracks 11, which if suitably tilted with free end at a level higher than the main tracks would be able to engage a subsequent or higher step and facilitate the lifting of the trolley up to the level of such subsequent step.

Naturally, during the ascent, it is possible to suitably move the load with respect to the main frame 2 and to the tracks 3, e.g. due to angular movement means 6 or to actuator means 15.

With regard instead to the descent steps, a trolley according to the present invention can be driven in the same manner described above, but in reverse sequence.

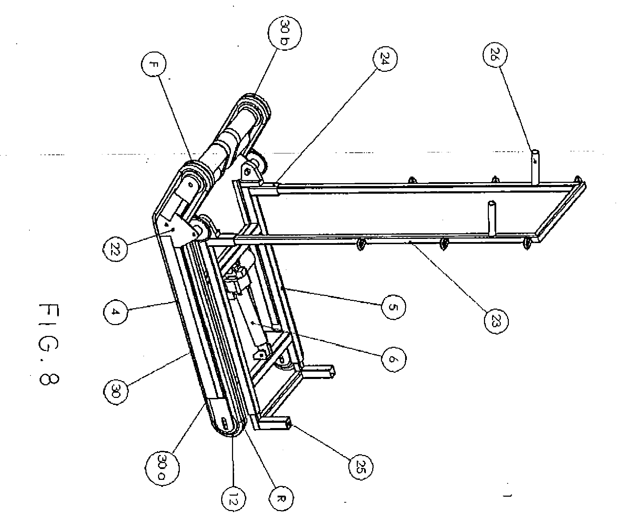

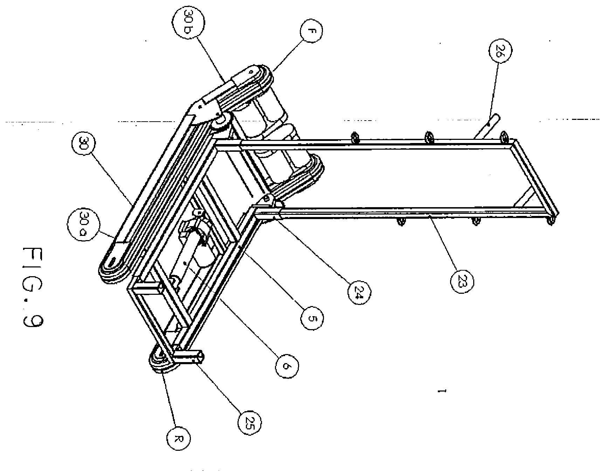

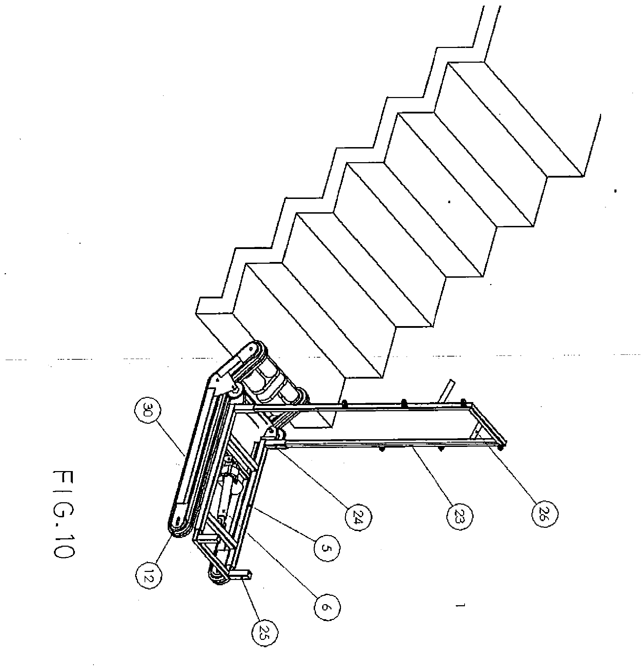

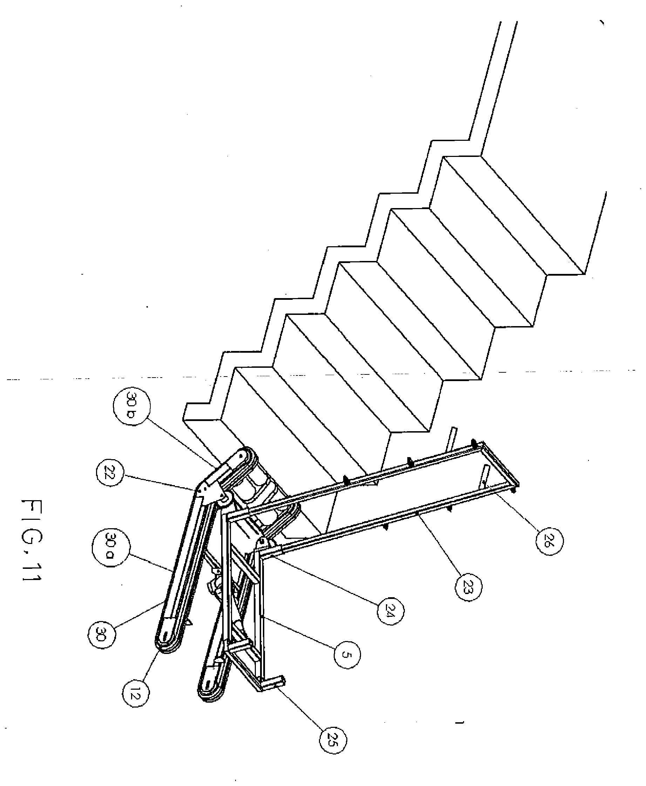

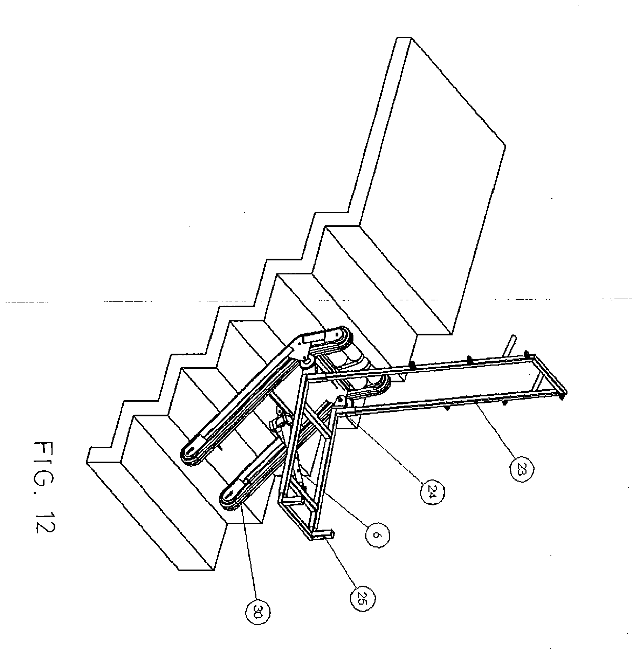

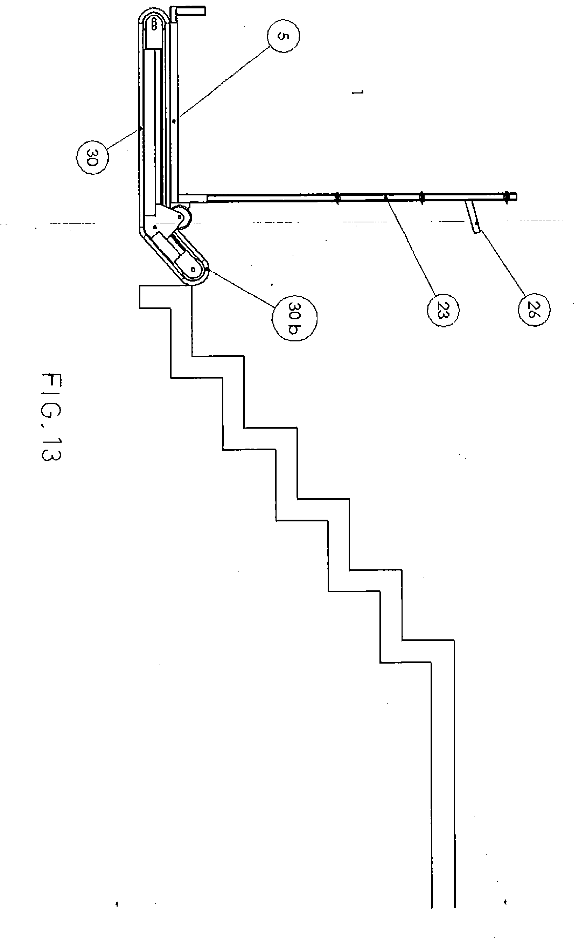

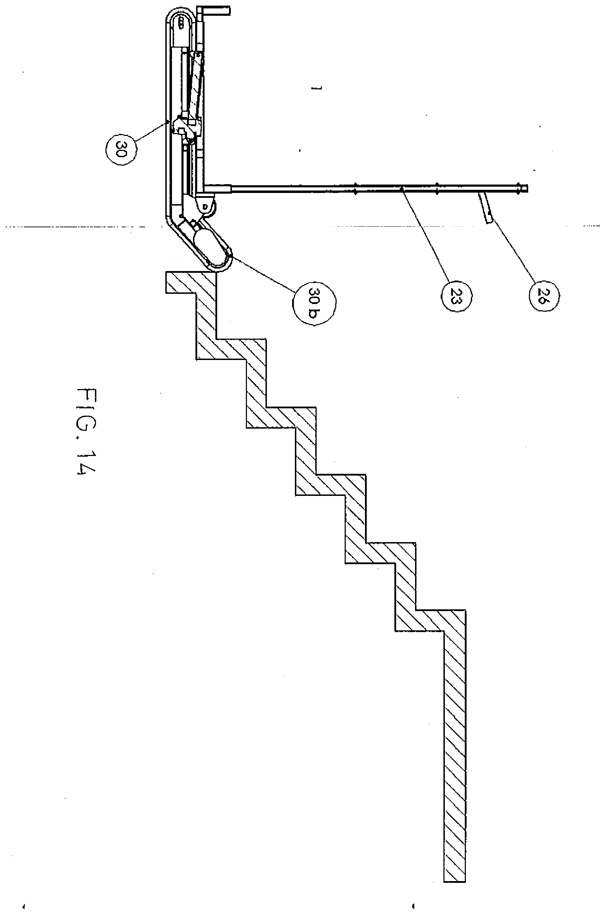

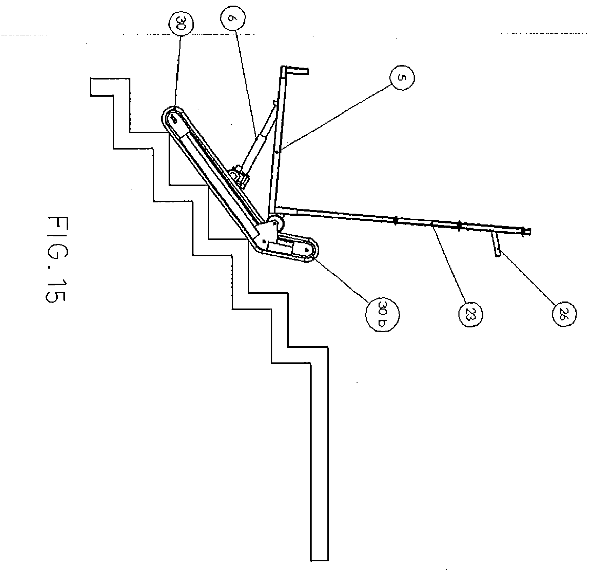

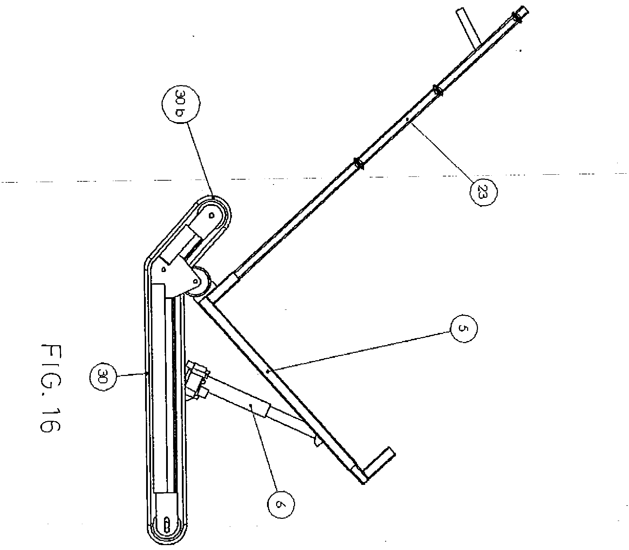

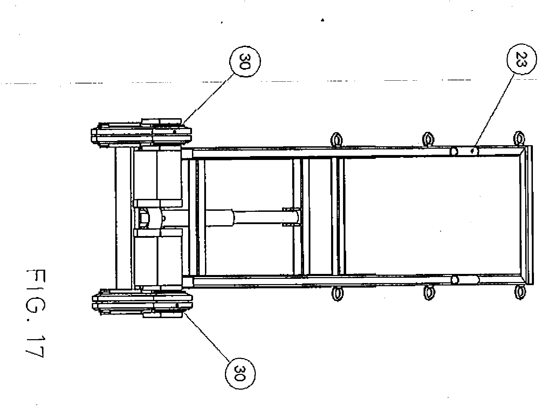

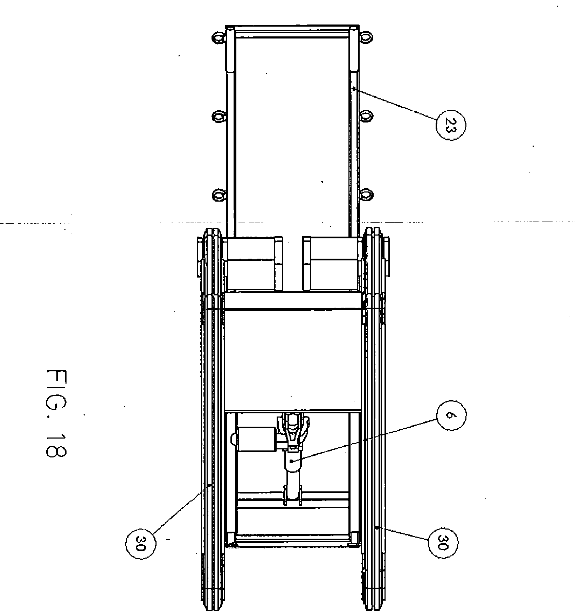

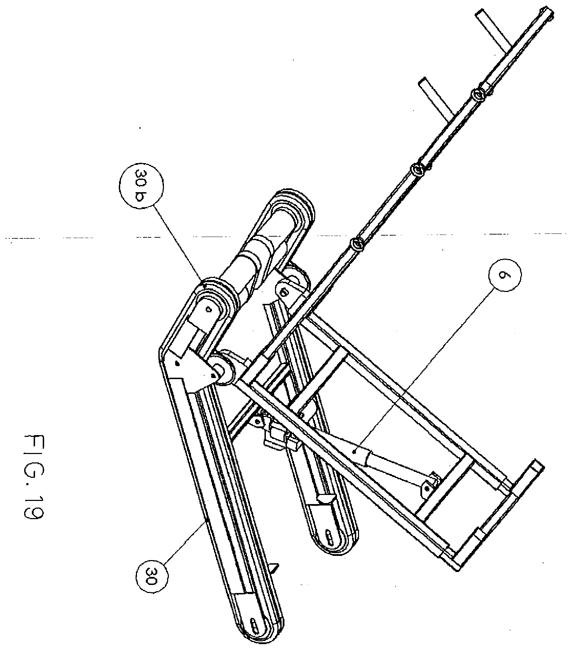

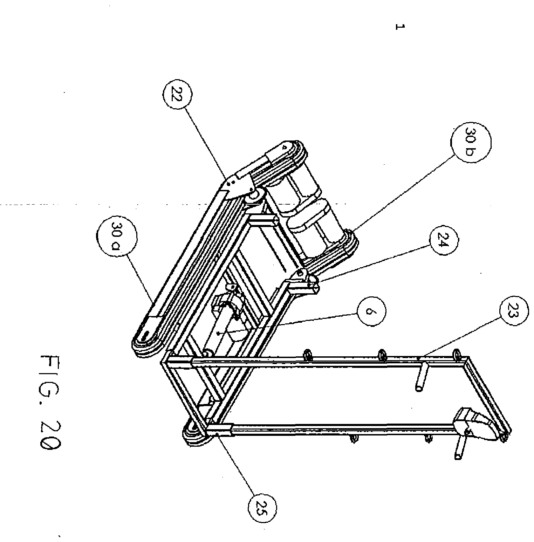

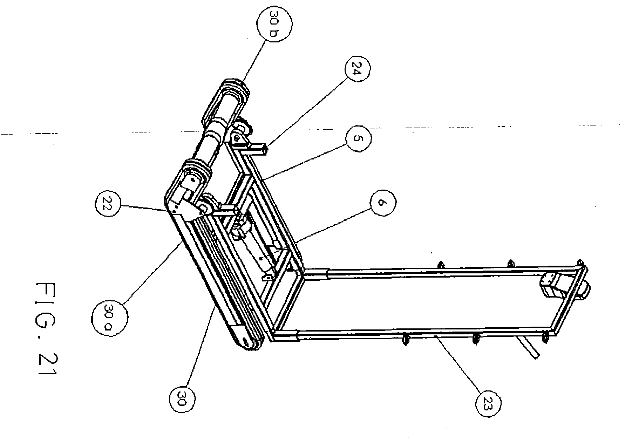

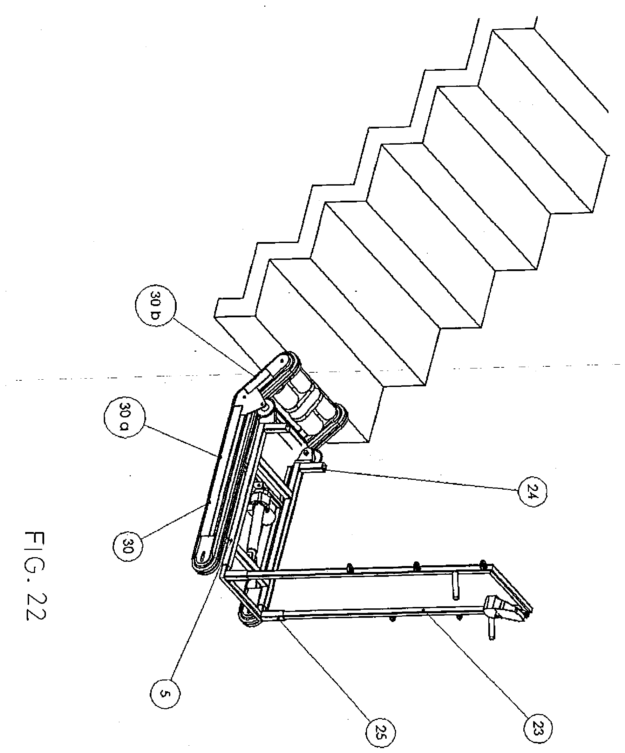

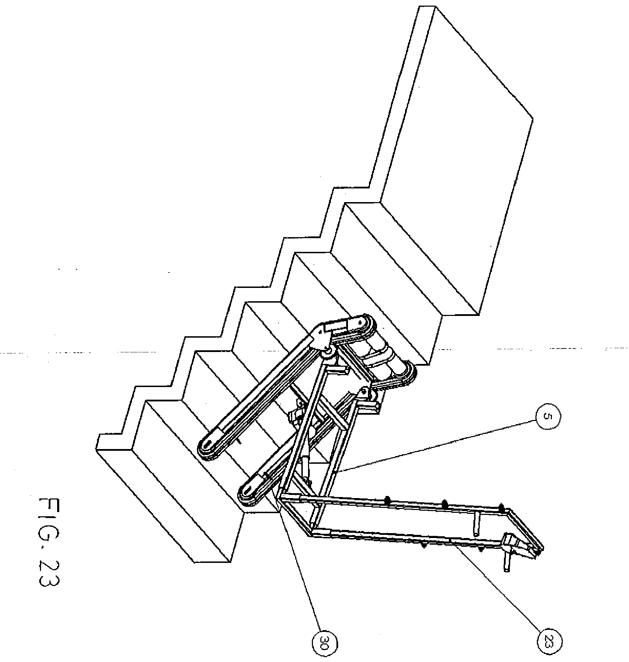

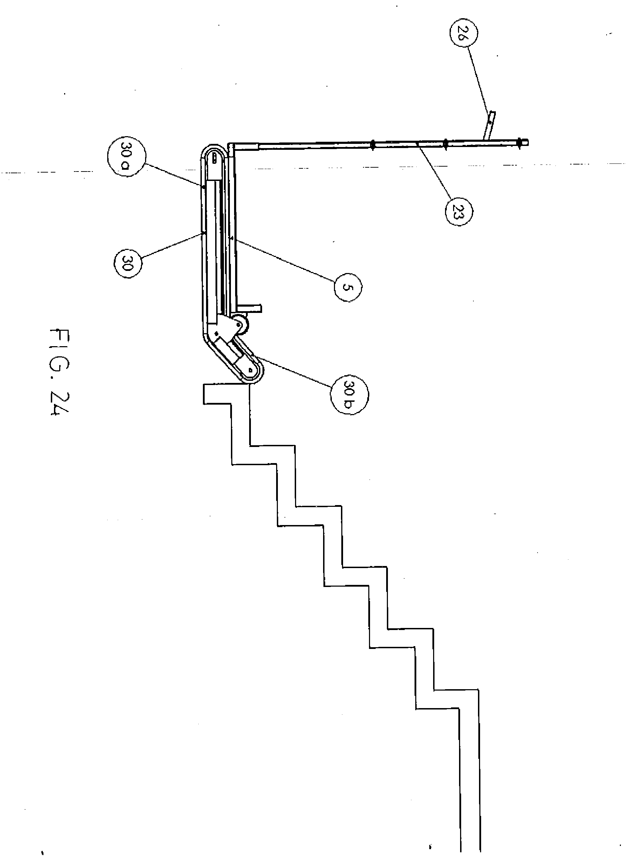

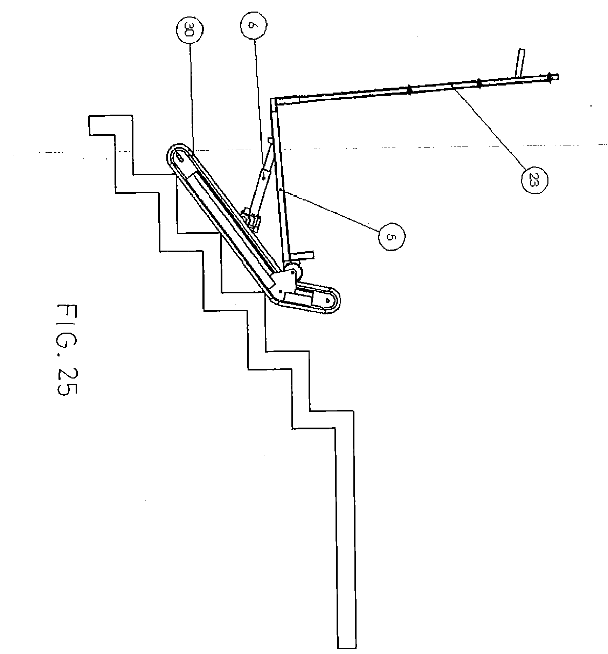

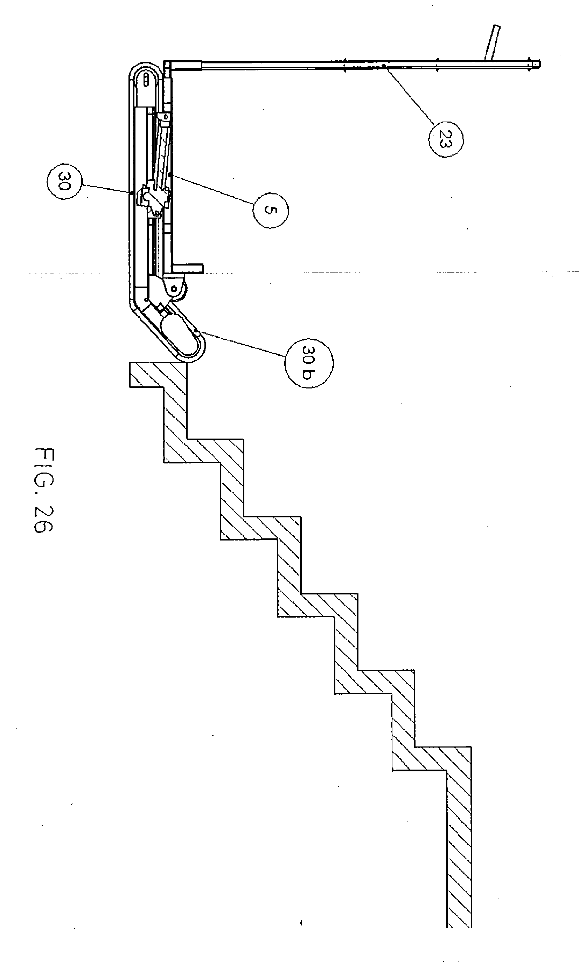

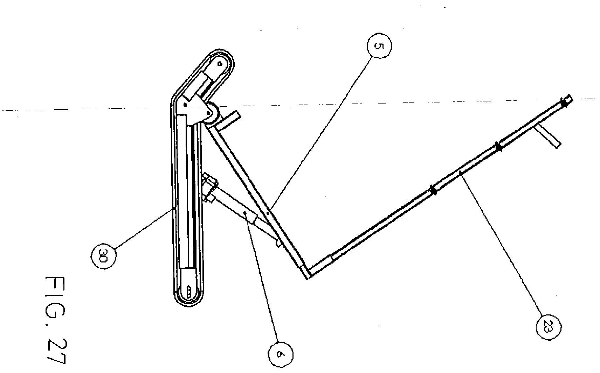

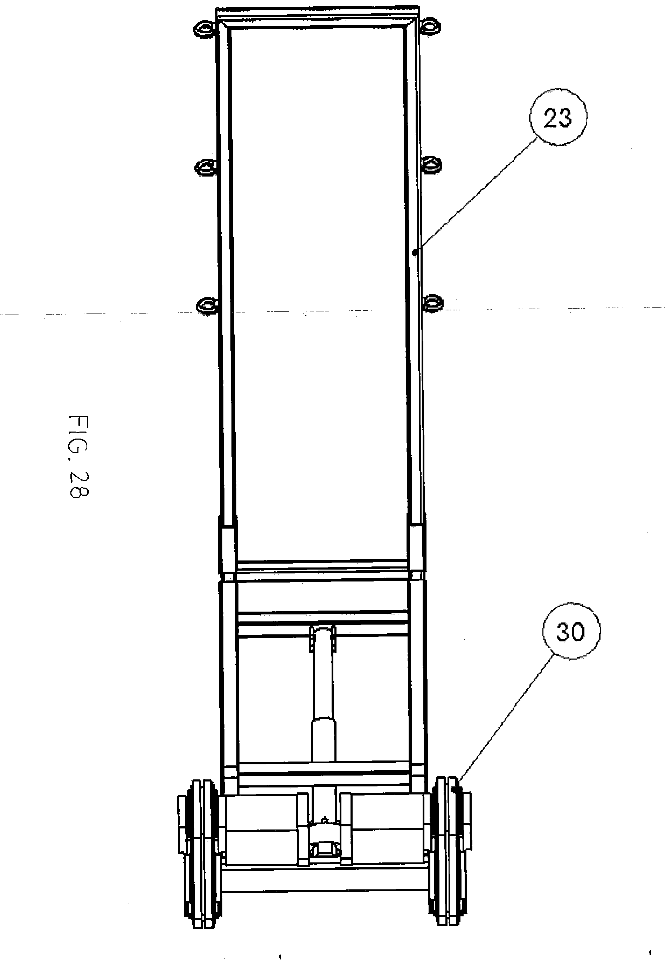

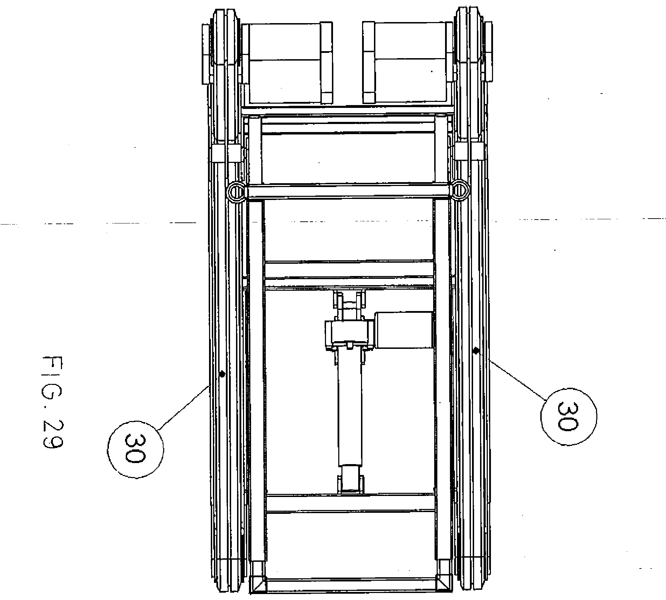

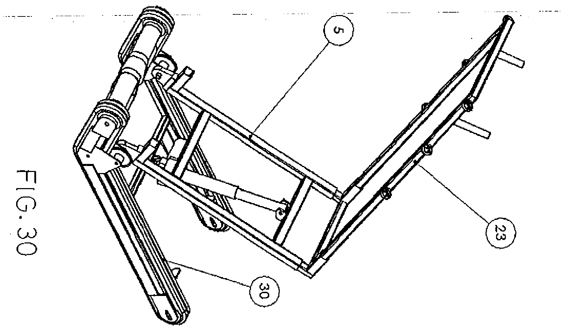

With reference now to Figures 8 to 30, a second trolley embodiment is illustrated according to the present invention, similar to the above-described trolley, but in which one or more main tracks 30 comprise a main section 30a which defines the first slide surface 4 and at least one secondary section 30b tilted or tiltable with respect to the main section 30a and placed at the front F or back R of the trolley. More particularly, each track 30 is sent around two toothed wheels or chains 12 and between the main section 30a and the secondary section 30b a transmission component 22 is provided, if desired adjustable, intended to deflect or tilt the secondary section 30b with respect to the main section 30a.

The trolley is then preferably provided with a handle 23, as well as with a first engagement portion 24 for the handle 23 placed at the front F of the trolley 1, and a second engagement portion 25 for the handle or grip 23 placed at the back R of the trolley 1. The engagement portions 24 and 25 comprise one or more pairs of tubular components with opening directed upward in use; a respective stem or rod of the handle 23 is insertable in such tubular components, such stem supporting grip elements 26 at the top that can be grasped by the user. Naturally, control means can be provided on the handle, such as a push-button panel of the trolley.

Due to such expedient, the operator can decide to maneuver the trolley by means of a handle placed on the front or on the back thereof.

The tubular components 24 and 25 can be projected upward from the support frame 2 or from the load bed 5. More particularly, the load bed 5 can comprise a telescopic structure, with tubular elements in which rod-like elements can be inserted or disconnected, so to be able to lengthen-shorten the support surface 5a.

As will then be understood, the tracks 30 could be mounted on the trolley of Figures 1 to 7, just like the handle 23 with engagement portions 24 and 25 could be provided on such trolley.

A trolley according to the present invention can then provide for means (not illustrated in the drawings) for rotating the load bed 5 around an axis substantially vertical or orthogonal to the load bed 5.

For the control of the movements and the position of the components of a trolley according to the present invention, the trolley can be provided with a program control unit (not illustrated in the drawings) so as to automate the ascent or descent of the trolley on a staircase. Furthermore, a trolley according to the present invention can be controlled by means of a remote control or another remote control system.

As will be understood, due to a trolley according to the present invention as defined in the claims is possible to safety transport a load up or down a staircase of any size or shape, whether helical or straight.

## Claims

1. A trolley for the transportation of a load on staircases having a main support frame (2), at least one main track (3, 30) mounted for rotation thereby projecting below said main support frame (2) in order to define a first lower slide surface (4) for the trolley, motor means or actuation means for said at least one main track (3, 30), and at least one load bed (5) supported by said main support frame (2), comprising at least one auxiliary frame structure (7) provided with support and slide or roll means (8) delimiting a second slide surface (9) on the lower part, and lifting-lowering means (10a, 10b) for said at least one auxiliary frame structure (7) designed to move said at least one auxiliary frame structure (7) with respect to said main support frame (2) between: an upper rest position, in which said at least one auxiliary frame structure (7) is located with its support and slide or roll means (8) at a higher level than that of said first lower slide surface (4) and said trolley (1) is movable by said at least one main track (3, 30), and a lower work position, in which said main support frame (2) is at a level higher than said at least one auxiliary frame structure (7) and said trolley (1) rests on said at least one auxiliary frame structure (7) and is movable on said support and slide or roll means (8); said auxiliary frame structure (7) is housable at an intermediate section of said main support frame (2) and when placed in said upper rest position it is arranged completely within the bulk of said main support frame (2); when said auxiliary frame structure (7) is placed in said lower work position, said at least one main track (3, 30) projects beyond said auxiliary frame structure (7) at the front (F) and/or back (R) of said trolley; **characterized in that** it further comprises an auxiliary track (11) provided for said one main track (3,30), said auxiliary track (11) being placed on the front (F) or on the back (R) of said main track (3,30) and is tilted or tiltable with respect thereto.

2. A trolley according to claim 1, **characterized in that** said lifting-lowering means (10a, 10b) comprise at least one linear actuator (10a) pivoted at one end thereof to a portion of said auxiliary frame structure (7) and at the other end thereof to said main support frame (2).

3. A trolley according to claim 1, **characterized in that** said lifting-lowering means (10a, 10b) comprise an articulated polygon group (10b) pivoted on one side to said auxiliary frame structure (7) and on the other side to said main support frame (2).

4. A trolley according to any preceding claim, **characterized in that** said support and slide or roll means comprise wheels (8) that can be oriented in different running directions.

5. A trolley according to any preceding claim, **characterized in that** it comprises means for the angular movement (6) of said at least one load bed (5) with respect to said main support frame (2).

## Patentansprüche

1. Wagen zum Transport einer Last auf Treppen, versehen mit einem Hauptstützrahmen (2), wobei mindestens eine Hauptschiene (3, 30) schwenkbar in diesem Fall unter dem Hauptstützrahmen (2) hervorsteht, um eine erste untere Gleitfläche (4) für den Wagen zu definieren, wobei die Motoreinrichtung oder die Antriebseinrichtung für mindestens eine Hauptschiene (3, 30) und mindestens eine Lastbasis (5), die von dem Hauptstützrahmen (2) getragen wird, mindestens eine Hilfsrahmenstruktur (7) umfasst, die mit Stütz-, Gleit- oder Rollmitteln (8) versehen ist, die mindestens eine zweite Gleitfläche (9) am unteren Teil definieren, und mit Hebe-/Senkmitteln (10a, 10b) für mindestens eine Hilfsrahmenstruktur (7), die so ausgelegt ist, dass sie mindestens eine Hilfsrahmenstruktur (7) relativ zum Hauptstützrahmen (2) zwischen: einer oberen Ruheposition, in der mindestens eine Hilfsrahmenstruktur (7) mit seinen Stütz-, Gleit- oder Rollmitteln (8) auf einer höheren Ebene als der ersten unteren Gleitfläche (4) und der Wagen (1) angeordnet ist und sich über mindestens eine Hauptschiene (3, 30) bewegen kann, und eine niedrigere Arbeitsposition, in der sich der Hauptstützrahmen (2) auf einem höheren Niveau als der von mindestens einer Hilfsrahmenstruktur (7) befindet und der Wagen (1) auf mindestens einer Hilfsrahmenstruktur (7) ruht (7) sich auf den Stütz-, Gleit- oder Rollmitteln (8) bewegen; wobei die Hilfsrahmenstruktur kann in einem Zwischenteil des Hauptstützrahmens (2) untergebracht sein, und wenn sie in der oberen Auflageposition platziert ist, ist sie vollständig innerhalb des Hauptstützrahmenkörpers (2) angeordnet und wenn der Hilfsrahmen (7) in der unteren Arbeitsposition angeordnet ist, mindestens eine Hauptschiene (3, 30) über die Hilfsrahmenstruktur (7) an der Vorder-(F) und/oder Rückseite (R) des Wagens hinausragt, **dadurch gekennzeichnet, dass** er ferner eine Hilfsschiene (11) umfasst, die für eine Hauptschiene (3, 30) hergestellt ist, und die Hilfsschiene (11) an der Vorder-(F) oder Rückseite (R) der Hauptschiene (3, 30) angeordnet und diesbezüglich umgekippt oder kippbar ist.

2. Wagen nach Anspruch 1, **dadurch gekennzeichnet, dass** das Hebe-/Senkmittel (10a, 10b) mindestens einen Linearantrieb (10a) umfasst, der an einem Ende davon in einem Teil der Hilfsrahmenstruktur (7) und am anderen Ende desselben am Hauptstützrahmen (2) gedreht ist.

3. Wagen nach Anspruch 1, **dadurch gekennzeichnet, dass** das Hebe-/Senkmittel (10a, 10b) eine gelenkige polygonale Gruppe (10b) umfasst, die auf einer Seite in Bezug auf die Hilfsrahmenstruktur (7) und auf der anderen Seite in Bezug auf die Hauptstützrahmen (2) gedreht ist.

4. Wagen nach einem der vorhergehenden Ansprüche, **dadurch gekennzeichnet, dass** die Stütz-, Gleit- oder Rollmittel Räder (8) umfassen, die in verschiedenen Bewegungsrichtungen ausgerichtet sein können.

5. Wagen nach einem der vorhergehenden Ansprüche, **dadurch gekennzeichnet, dass** er Mittel zur Winkelbewegung (6) von mindestens einer Lastbasis (5) in Bezug auf den Hauptstützrahmen (2) umfasst.

## Revendications

1. Chariot pour le transport d'une charge sur l'escalier, pourvu d'un châssis de support principal (2), d'au moins un rail principal (3, 30) monté en rotation faisant saillie sous le cadre de support principal (2) afin de définir une première surface de glissement inférieure (4) pour le chariot, de moyens moteurs ou moyens d'entraînement pour au moins un rail principal (3, 30) et au moins une base de charge (5) supportée par le châssis de support principal (2), comprenant au moins une structure de châssis auxiliaire (7) pourvue de moyens de support, de glissement ou roulement (8) qui délimitent une deuxième surface de glissement (9) sur la partie inférieure, et des moyens de levage/abaissement (10a, 10b) pour au moins une structure de châssis auxiliaire (7), conçue pour déplacer au moins une structure de châssis auxiliaire (7) par rapport au châssis de support principal (2) entre: une position de repos supérieure, dans laquelle au moins une structure de châssis auxiliaire (7) est placée avec ses moyens de support, de glissement ou roulement (8) à un niveau supérieur à celui de la première surface de glissement inférieure (4) et le chariot (1) peut se déplacer à travers au moins un rail principal (3, 30), et une position de travail inférieure dans laquelle le châssis de support principal (2) se trouve à un niveau supérieur à celui d'au moins une structure de châssis auxiliaire (7), et le chariot (1) repose sur au moins une structure de châssis auxiliaire (7) et peut se déplacer sur lesdits moyens de support, de glissement ou roulement (8); la structure de châssis auxiliaire (7) peut être logée dans une partie intermédiaire du châssis de support principal (2), et lorsqu'elle est placée en position de repos supérieure, elle est disposée complètement à l'intérieur du corps du châssis de support principal (2) et lorsque la structure du châssis auxiliaire (7) est disposée en position de travail inférieure, au moins un rail principal (3, 30) fait saillie au-delà de la structure de châssis auxiliaire (7) à l'avant (F) et/ou à l'arrière (R) du chariot, **caractérisé en ce qu'**il comprend en outre un rail auxiliaire (11) réalisé pour un rail principal (3, 30), et le rail auxiliaire (11) est placé à l'avant (F) ou à l'arrière (R) du rail principal (3, 30), et est retourné ou replié par rapport à celui-ci.

2. Chariot selon la revendication 1, **caractérisé en ce que** les moyens de levage/abaissement (10a, 10b) comprennent au moins un actionneur linéaire (10a) tourné à une de ses extrémités, dans une partie de la structure de châssis auxiliaire (7), et à l'autre extrémité de celle-ci sur le châssis de support principal (2).

3. Chariot selon la revendication 1, **caractérisé en ce que** les moyens de levage/abaissement (10a, 10b) comprennent un groupe polygonal articulé (10b), tourné d'un côté par rapport à la structure de châssis auxiliaire (7) et de l'autre côté par rapport au châssis de support principal (2).

4. Chariot selon l'une des revendications précédentes, **caractérisé en ce que** les moyens de support, de glissement ou roulement comprennent des roues (8) orientables dans des différentes directions de déplacement.

5. Chariot selon l'une des revendications précédentes, **caractérisé en ce qu'**il comprend des moyens pour le déplacement angulaire (6) d'au moins une base de charge (5) par rapport au châssis de support principal (2).
